# EUROPEAN PATENT APPLICATION

(11) **EP 1 903 497 A1**
(43) Date of publication of application: **26.03.2008**
(21) Application number: 06447131.1
(22) Date of filing: 22.12.2006
(51) Int. Cl.: G06Q 50/00

(54) **Public private transport sharing model and technology**

(30) Priority: 03.01.2006 BE 200600007
(71) Applicant: Deman, Kristin, 9850 Nevele (BE)
(72) Inventor: Juwet, Marc, 9850 Nevele (BE)

(57) **Abstract**

This new type of public transport sharing is based on a fully integrated technical platform, technical infrastructure and business model whereby mobile telephone technology plays a crucial role and where the users (passengers demanding to travel and drivers having empty car seats on offer) can establish contact with each other, communicate with each other and conduct a simple financial transaction between themselves, simply but effectively and efficiently through a wired and/or wireless integrated data-, communications- and financial settlements-system with the purpose of engaging in shared transport. Neutral contact data are saved and made available (e.g. daily route, desired time and place of departure and arrival,...) as well as non-personal profiles (e.g. gender, musical preference, car preference,smoker/non smoker, political conviction, hobbies, education level, language,...). A special SMS can generate and attribute a code-word. The users can meet anonymously.

## Description

This application for a European patent concerns an innovative type of public transport, which partly makes use of private means and goods. It is partly public because governments may support the initiative, e.g. with appropriate legislation, or may even organise this new way of shared transport. It is partly private because the car owners and passengers/users are the hardware actors and telecom companies can contribute through the provision of their technological infrastructure, know how and distribution.

For the moment the market for hitchhiking and carpooling consists mostly of individual car owners who agree to take hiking passengers on an accidental basis on the one hand and more organised carpooling initiatives (like Taxi-stop in Belgium), who provide a data base to potential customers, but offer no direct communication system and no financial model.

To promote and advance public private transport sharing successfully it is necessary to install a fully integrated technical platform, to provide an easily accessible model wherein potentially interested customers can simply and effectively participate and communicate and easily conclude financial settlements/payments. Mobile telecommunication is the crucial element in this model. If such an easily accessible model were available, probably 8 to 10% of the commuters would be inclined to participate.

We claim a technical platform, technical infrastructure and business model concerning a wired and/or wireless integrated data-, communication- and financial settlements-system (payment system) aimed at the optimal organisation of a public private transport sharing system.
This participation model will be more effective and efficient than random hitchhiking or simple carpooling. In this model a driver of a private means of transport (e.g. a car, a lorry, a van or mini-bus,...) will agree to take at least one passenger from a certain departing/meeting place at a certain time, at an agreed price rate (e.g. standard cost/km) to make at least one trip together and this whole transport sharing model will be controlled by a technically integrated platform. The driver(s) and passenger(s) can communicate in advance (either verbally or by chat or e-mail) or the contact between them can be established in a more neutral and impersonal way (e.g. by SMS without contact in advance). This integrated technical platform consists of:
a. at least one server or an electronic network,
b. at least one computer database and relevant software for programmed and/or real time matching and for guiding the users (drivers and passengers) tot the meeting/departing place,
c. at least one protocol of at least one telecommunications operator: e.g. an access protocol, a financial transactions protocol, protocol for internet connection (WAP, GPRS,...), for database connection and so on, which can provide access to SMS modules, short dialling numbers, GPS-location, mobile telecom masts based location, last-minute information,...
d. at least one financial settlements system which facilitates the payment by users (passengers) to the driver (e.g. through prepaid account or card from a telecom operator),
e. eventually, but desirably, at least one website with all the relevant information and feedback options (e.g. profile form, offer and demand, localisation software, WAP or GPRS connections, links to public transport facilities, and so on), equipped with or without safe zone for registered users,
f. eventually, but desirably, a personal identification and/or verification system for the users (both drivers and passengers) e.g. an electronic ID-card with personal photograph or an SMS identification code word,...
g. eventually, but desirably, the possibility to consult at least one TV-channel to find information on the availability of the private public transport sharing possibilities.

The communication between the driver and the passenger(s) is conducted through mobile devices (e.g. mobile phones, wireless PDA's, wireless laptops with built-in wireless communication card, special GPS-devices with built-in telecommunication technology, ...) which have wireless access to the aforementioned technical platform provided by at least one telecommunications provider or server. GPS-facilities or comparable services can facilitate the communication considerably in real time and will play an important role in guiding the users to the meeting/departing place. The private public transport collaboration (or: sharing) system is thus organised in a fully integrated way.

This will possibly result in an considerable reduction of the number of private (individually used) cars in traffic, which will mean less traffic jams, a considerable reduction of the economical cost involved in traffic congestion, less accidents, better circulation,... and generally less CO₂-pollution.

The technical platform enables - based on a database and/or real time data from telecom masts or a GPS-system feedback - contact between available drivers of vehicles in real time to one or more potential passengers who happen to be in the neighbourhood of the itinerary or route.

It is important that contact between users is established in a way which is individually acceptable to both of them. This may be through an interface in an anonymous way, or in a restricted transparency (limited profile), or in full transparency (full profile). Contact can thus be established in the way which suits the users best in order to realise the private public transport collaboration.

The technical platform may/may not be organised by the government, by a company, or by an association. In the beginning potential users will be able to register (free or at a rate) as a member. Once they are granted access to the system, they can provide neutral personal contact data (like daily routes, calendar, desired meeting/departing time and place, desired arrival time and place,...), as well as other profiles (like gender, musical preferences, smoker/non-smoker, political conviction, hobbies, education level, language,...). The platform can further provide the users with a range of facilities such as demand and offer data base, reservation module, currently available itineraries, international itineraries, special telephone rates, search options, information on and connection to other public transport (bus, underground, train and flight connections), restaurant and hotel reservations....

At least one telecommunications provider is necessary for this concept of private public transport sharing model. More than one provider can be involved in organising the financial transactions side of the technological platform.

After consultation with all the partners involved, the platform can engage in offering special insurance formulas and rates (e.g. a reduction for the passenger who leaves his car at home) or special preferential toll rates (on highways, bridges, tunnels) can be offered to car pooling users.

A new protocol can be plugged in to mobile phones of the driver and the user to realise financial settlements through an IR-gate and/or bluetooth, or a comparable wireless system.

The financial settlements/payment system can function in different ways: e.g. by way of a pre-paid card or a rechargeable system, by way of a current account or an invoice from the telecom operator or organising association, by way of an alternative internet paying system like paypal, by way of a deposit account of the users with the telecom provider from which the amount due can be credited and debited,..... A variety of possibilities can be offered to the users from which they can choose.

We also claim a special SMS and a specific protocol, offered by a telecom operator, and which is sent through to both of the users whereby the SMS or protocol generates a code-word randomly , which is required by the driver from the passenger before access to the vehicle of the driver is granted. In this way only the parties involved in a specific transaction will know this code-word, which will enhance the safety of the contact between the parties. Such an SMS or specific protocol may find itself useful in other arranged contacts between people who are unknown to one another in general.

The technical platform can be used for other purposes, e.g. for locating and meeting people for a date, for going out together to concerts and events in general,...

The technical platform offers the possibility that users do not at first know each others mobile phone numbers, but that the first contact/connection between their mobile phones is established through computer networking.

## Claims

1. We claim a technical platform, technical infrastructure and business model concerning a wired and/or wireless integrated data-, communication- and financial transaction-system (payment system) aimed at the optimal organisation of a public private transport sharing system.
This participation model will be more effective and efficient than random hitchhiking or simple carpooling. In this model a driver of a private means of transport (e.g. a car, a lorry, a van or mini-bus,...) will agree to take at least one passenger from a certain departing/meeting place at a certain time, at an agreed price rate (e.g. standard cost/km) to make at least one trip together, whereby the driver and passenger(s) will communicate in advance or will be brought into contact with each other through at least one integrated technical platform which consists of:
a. at least one server or an electronic network,
b. at least one computer database and relevant software for programmed and/or real time matching and for guiding the users (drivers and passengers) tot the meeting/starting place,
c. at least one protocol of at least one telecommunications operator: e.g. an access protocol, a financial transactions protocol to facilitate the payments, protocol for internet connection (WAP, GPRS,...), for databank connection and so on which can provide access tot SMS modules, short dialling numbers, GPS-location, mobile telecom masts based location, last-minute information,...
d. at least one financial transaction system which facilitates the payment by users (passengers) to the driver (e.g. through prepaid account or card from a telecom operator),
e. eventually, but desirably, at least one website with all the relevant information and feedback options (e.g. profile form, offer and demand, localisation software, WAP or GPRS connections, links to public transport facilities, and so on), equipped with or without safe zone for registered users,
f. eventually, but desirably, a personal identification and/or verification system for the users (both drivers and passengers) e.g. an electronic ID-card with personal photograph or an SMS identification code-word,...
g. eventually, but desirably, the possibility to consult at least one TV-channel to find information on the availability of the private public collaborative transport,
and whereby the communication between the driver and the passenger(s) is conducted through mobile devices (e.g. mobile phones, wireless PDA's, wireless laptops with built-in wireless communication card, special GPS-devices with built-in telecommunication technology, ...) which have wireless access to the aforementioned technical platform provided by at least one telecommunications provider or server and whereby the location of the meeting/departing place is facilitated in real time by GPS-facilities or comparable services available to the telecom provider.
The private public transport sharing system is thus organised in a fully integrated way.
This will possibly result in an considerable reduction of the number of private (individually used) cars in traffic, which will mean less traffic jams, reduction of the economic cost of traffic congestion, less accidents, better circulation,... and generally less CO₂-pollution.

2. Technical platform, as described in claim 1, which enables - based on a database and/or real time data from telecom masts or a GPS-system feedback - contact between available drivers of vehicles in real time to one or more potential passengers who happen to be in the neighbourhood of the itinerary or route.

3. Technical platform, as described in claim 1, whereby contact between users is established in a way that is individually acceptable to both of them before engaging in a shared way of transport. This may be through an interface in an anonymous way, or in a restricted transparency (limited profile), or in full transparency (full profile).

4. Technical platform, as described in claim 1, which is either organised by the government, by a company, or by an association, whereby potential users will be able to register (free or at a rate) as a member. Once they are granted access to the system, the users can provide neutral personal contact data (like daily routes, calendar, desired meeting/starting time and place, desired arrival time and place,...), as well as other profiles (like gender, musical preferences, car preference, smoker/non-smoker, political conviction, hobbies, sport, education level, language,...). The platform can further provide the users with a range of facilities such as demand and offer data base, reservation module, currently available itineraries, international itineraries, special telephone rates, information with regard to insurance, search options, information on and connection to other public transport (bus, underground, train and flight connections), restaurant and hotel reservations....

5. Technical platform, as described in claim 1, where at least one, but better two or more telecommunications providers are involved in organising the financial transactions/settlement of payments side of the technological platform by centralising the micro-payments and organising internal settlements (credit and debit to accounts).

6. Technical platform, as described in claim 1, where the users (drivers and passengers) can be offered special insurance formulas and rates, (e.g. a reduction for the passenger who agrees to leave his car at home), or special preferential toll rates (on highways, bridges, tunnels) can be offered to carpooling users.

7. The mobile phones of the driver and the user , as described in claim 1, which can be equipped with an IR-gate and/or bluetooth, or a comparable wireless system to enable them to realise financial settlements transactions.

8. The payment settlement system, as described in claim 1, which can function in different ways: e.g. by way of a pre-paid card or a rechargeable system, by way of a current account or an invoice from the telecom operator or organising association, by way of an alternative internet paying system like paypal, by way of a deposit account of the user (passenger) with the telecom provider from which the amount due can be credited.

9. SMS and an specific protocol, as described in claim 1, offered by a telecommunications operator, which is sent through to both of the users whereby the SMS or protocol generates a code-word randomly , which is required by the driver from the passenger before access to the vehicle of the driver is granted. In this way only the parties involved in a specific transaction will know this code-word, which will enhance the safety of the contact between the parties. Such an SMS or specific protocol may find itself useful in other contacts between people who are unknown to one another in general.

10. The technical platform, as described in claim 1, can be used for other purposes, e.g. for locating and meeting people for a date, for going out together to concerts and events in general,...

11. The technical platform, as described in claim 1, whereby the users do not initially know each others mobile phone numbers, but where the first contact/connection between their mobile phones is established through computer networking.
